# EUROPEAN PATENT APPLICATION

(11) **EP 1 990 037 A1**
(43) Date of publication of application: **12.11.2008**
(21) Application number: 07009424.8
(22) Date of filing: 10.05.2007
(51) Int. Cl.: A61H 1/00, A63B 21/00

(54) **Damping plate, training assembly and training device**

(71) Applicant: Power Plate International Ltd., London NW1 8LH (GB)
(72) Inventor: Van de Meer, Augustinus Leonardus Nicolaas, 2131 MR Hoofddorp (NL)
(74) Representative: de Lang, Robbert-Jan

(57) **Abstract**

A damping plate for a training device for stimulating at least part of the body of a living creature by means of vibration, wherein the damping plate comprises a base plate comprising a first surface and a second surface, wherein the first surface is adapted to support the training device and attached to the second surface is at least one damping member for in use being placed on a foundation, which damping member is adapted to prevent transmission of the vibration of the training device to the foundation, and also a training assembly, training device and the use of such a damping plate, training assembly and training device.

## Description

This invention relates to a damping plate, training assembly, training device and the use of such a damping plate, training assembly and training device.

Training devices for stimulating at least part of the body of a living creature by means of vibration are used at many locations. The creature may be a human or an animal.

A problem of the known training device is that when the device is placed on the floor of a building with more than one room, the use of the training device leads to noise in the surrounding rooms. This noise is often experienced as disturbing by persons present in the surrounding rooms.

A objective of the present invention is to provide a solution to the above mentioned problem.

This problem is solved by the damping plate according to claim 1, the training assembly according to claim 8 and the training device according to claim 11.

The noise produced in the surrounding room, is caused by the fact that during use vibrations of the training device are transmitted to the foundation on which the training device is placed.

The damping plate according the invention comprises a base plate comprising a first surface and a second surface, wherein the first surface is adapted to support the training device for stimulating at least part of the body of a living creature by means of vibration and attached to the second surface is at least one damping member for in use being placed on a foundation, which damping member is adapted to prevent transmission of the vibration of the device to the foundation.

By placing the damping plate according the invention with its at least one damping member on the foundation and placing the training device on the first surface of said damping plate, a noise in the surrounding rooms will not be produced because the at least one damping element prevents transmission of the vibration of the training device to the foundation.

A further advantage of the a damping plate, training assembly, training device according the invention and the use of such a damping plate, training assembly and training device is that in use the user experiences a more comfortable stimulation of the vibration.

In an embodiment of the damping plate according the invention, the at least one damping member together have a spring constant of between 15 and 35 kN/m, preferably between 20 and 22 kN/m. The at least one damping member may comprise a spring which may be formed out of rubber. The at least one damping member may comprise a damping body which may be formed out of silicon material. The spring and damping body may be positioned such that the spring surrounds the damping body. The at least one damping member may also be formed as one piece with the second surface.

The training assembly according the invention comprises
- a training device for stimulating at least part of the body of a living creature by means of vibration and
- a damping plate according to the invention.

In use the training device is supported by the damping plate. The training device may be adapted to vibrate with a frequency of between 0 and 100 Hz, preferably between 20 and 60 Hz.

The training device according the invention comprises
- a base structure comprising a lower surface which in use substantially is directed to a foundation on which the device is placed,
- an vibration member comprising a contact area for making contact with at least part of the body of a living creature,
- driving means for driving the vibration member such that the vibration member makes a vibrating movement, wherein
attached to the lower surface is at least one damping member for in use being placed on the foundation, which damping member is adapted to prevent transmission of the vibration of the training device to the foundation.

In an embodiment of the invention the at least one damping member together have a spring constant of between 15 and 35 kN/m, preferably between 20 and 22 N/m. The at least one damping member may comprise a spring which may be formed out of rubber. The at least one damping member may comprise a damping body which may be formed out of silicon material. The spring and damping body may be positioned such that the spring surrounds the damping body. The driving means may be adapted to move the vibration member with a frequency of between the 0 and 100 Hz, preferably between 20 and 60 Hz.

The present invention will be more readily appreciated as the same becomes better understood by reference to the following detailed description and considered in connection with the accompanying drawings in which like reference symbols designate like parts and in which:
Fig. 1A shows a bottom view an embodiment of the damping plate according the invention,
Fig. 1B shows a cross sectional view of the damping plate of fig. 1A along line I-I,
Fig. 2A shows in perspective an enlarged view of one of the damping members of the damping plate of fig. 1,
Fig. 2B shows an explosion view of the damping member of fig. 2A,
Fig. 2C shows a side view of the damping element of fig. 2A,
Fig. 2D shows a cross sectional view of the damping member of fig. 2C along line II-II,
Fig. 3 shows an embodiment of the training assembly according the invention, which training assembly comprises the damping plate of fig. 1,
Fig. 4 shows an further embodiment of the assembly according the invention, which training assembly comprises the damping plate of fig. 1 and
Fig. 5 shows an embodiment of the training device according the invention, which training device comprises the damping members of fig. 2.

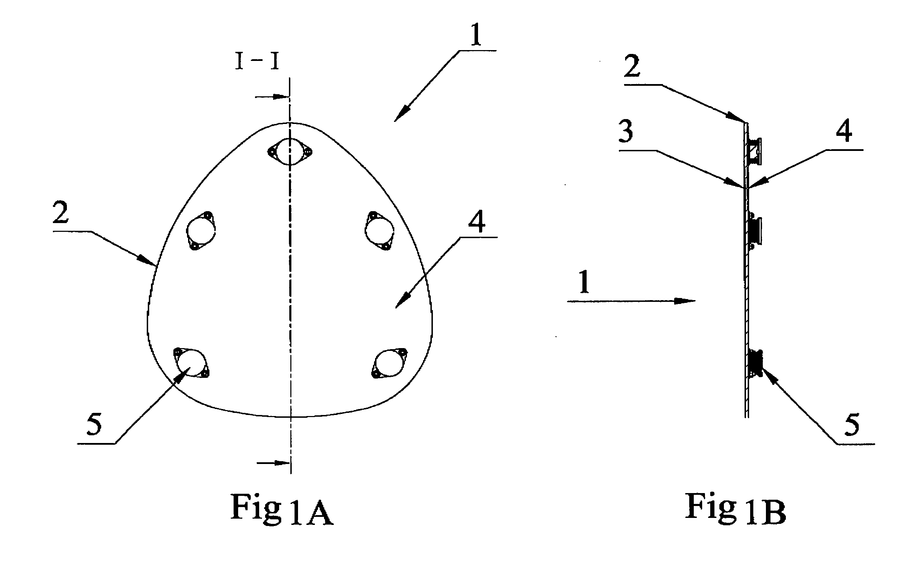

Figure 1 shows an embodiment of the damping plate according the invention. The damping plate 1 comprises a base plate 2 with a first surface 3 and a second surface 4. The first surface 3 is adapted to support a training device for stimulating at least part of the body of a living creature by means of vibration. Attached to the second surface 4 are five damping members, which in use are placed on a foundation. The damping members are adapted to prevent transmission of vibration of the training device to the foundation. The five damping members have together a spring constant of approximately 100 kN/m. In this embodiment all the damping members have the same spring constant. This means that each damping member has a spring constant of 20 kN/m. It is also possible that the damping members have a spring constant which differs from each other.

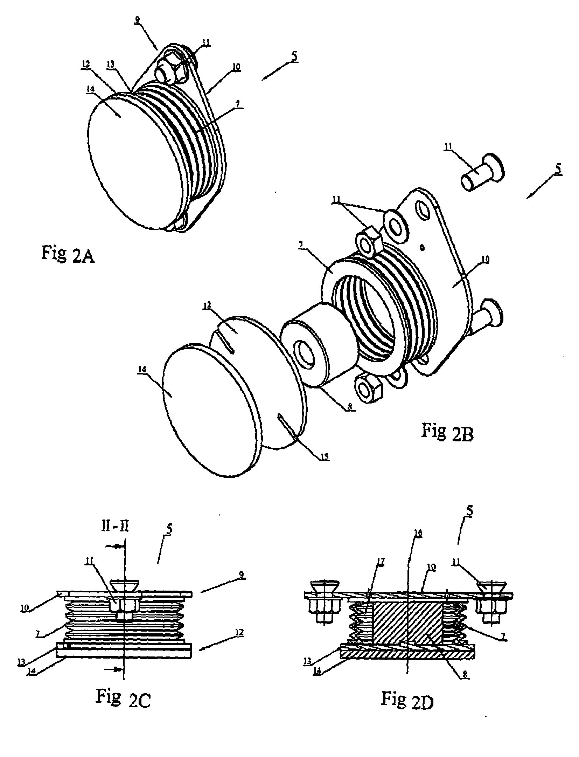

Figure 2 shows an enlarged view of one of the damping members of fig. 1. The damping member 5 comprises connection means 9 with which the damping member 5 is attachable to a surface, for example the surface of a damping plate or a training device. The connection means 9 comprise a connection plate 10 and two nut-bolt 11 combinations. Any other type of suitable connection means may be provided. The damping member 5 comprises a rubber spring 7, which surrounds a silicon damping body 8. The spring 7 is located at a distance for the damping body 8, such that a gas chamber 17 is formed. The spring 7 and damping body 8 are at one end thereof in contact with the connection plate 10 and with the other end thereof in contact with support plate 12. The spring 7 is in a substantially airtight manner in contact with the connection plate 10 and the support plate 12. This means that when the damping member 5 is compressed, for example in the direction of the center line 16 thereof, the pressure of the gas, in this case air, located in the gas chamber 17 increases. This results in a damping effect. The support plate 13 is provided with two openings 15 through which in use air flows in and out of the gas chamber 17. The support plate 13 forms together with a rubber plate 14 the support means 12 of the damping member 5. The spring 7 has a spring constant of 15 kN/m and the damping body has an spring constant of 20 kN/m. It is also possible to combine a spring constant of the spring of between 15 and 35 kN/m with an spring constant of the damping body of between 15 kN/m and 35 kN/m.

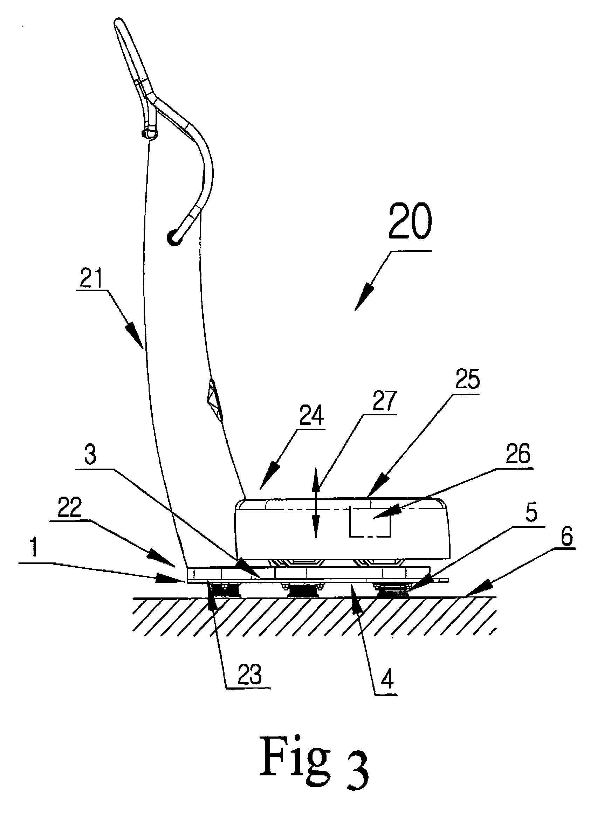

Figure 3 shows an embodiment of the assembly according the invention. The training assembly 20 comprises a training device 21 for stimulating at least part of the body of a living creature by means of vibration. The training device 21 comprises a base structure 22 with a lower surface 23. The lower surface 23 is directed to a foundation 6 on which the training device 21 is placed. The training device 21 further comprises a vibration member 24 with a contact area 25 for in use making contact with at least part of the body of the living creature. The vibration member 24 is driven in a vibrating movement 27 by driving means 26 located inside the training device 21. The training assembly 20 further comprises the damping plate of fig. 1. The training device 21 is supported in such a way by the damping plate 1 that the first surface 3 of the damping plate 1 is in direct contact with the lower surface of the training device 21.

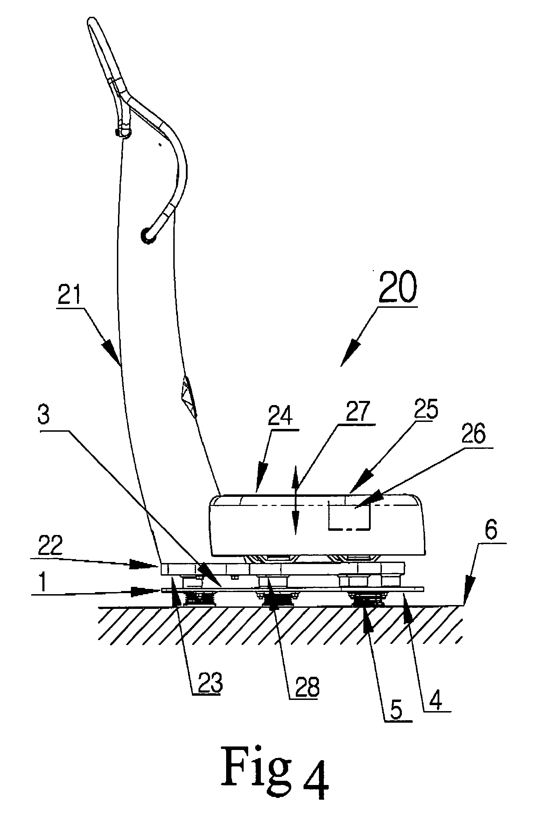

Figure 4 shows a further embodiment of the training assembly 20 according the invention. The training device 21 comprises generally known support feet 28 with which the training device 21 normally is placed on the foundation 6. The training device 21 is supported in such a way by the damping plate 1 of fig. 1 that the first surface 3 of the damping plate 1 is in direct contact with the support feet 28 of the training device 21. The first surface 3 of the damping plate 1 is located at a distance from the lower surface 23 of the training device 21.

In both the training assemblies of the fig. 3 and 4, the first surface 3 of the damping plate 1 is substantially directed to the lower surface 23 of the training device 21.

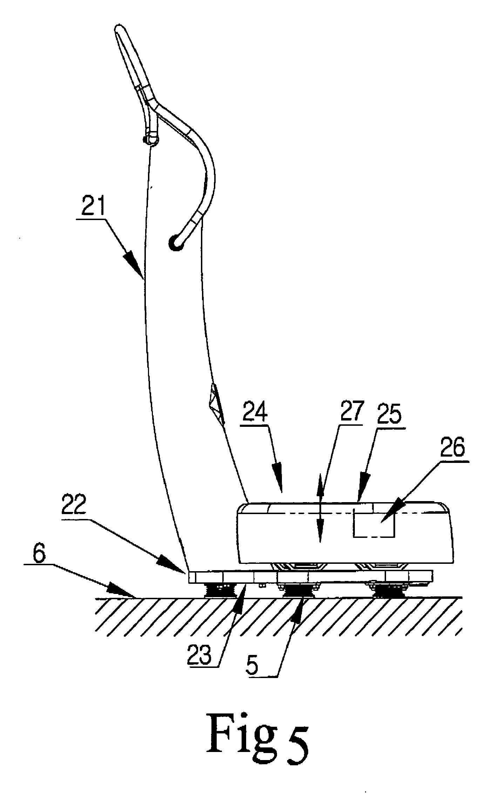

Figure 5 shows an embodiment of the training device according the invention. The training device 21 comprises a base structure 22 with a lower surface 23. The lower surface 23 is in use substantially directed to a foundation 6 on which the training device 21 is placed. The training device 21 comprises a vibration member 24 with a contact area 25 for in use making contact with at least part of the body of a living creature. The vibration member 24 is driven in a vibrating movement 27 by driving means 26 located inside the training device 21. The training device 21 further comprises five damping members 5 of fig. 2. The damping members 5 are attached to the lower surface 23 of the training device 21. The driving means 26 are adapted to move the vibration member with a frequency of between 0 and 100 Hz, preferably between 20 and 60 Hz.

## Claims

1. Damping plate for a training device for stimulating at least part of the body of a living creature by means of vibration, wherein the damping plate comprises
a base plate comprising a first surface and a second surface, wherein
the first surface is adapted to support the training device and attached to the second surface is at least one damping member for in use being placed on a foundation, which damping member is adapted to prevent transmission of the vibration of the training device to the foundation.

2. Damping plate according to claim 1, wherein the at least one damping member together have a spring constant of between 15 and 35 kN/m, preferably between 20 and 22 kN/m.

3. Damping plate according to any of the preceding claims, wherein the at least one damping member comprises a spring.

4. Damping plate according to any of the preceding claims, wherein the at least one damping member comprises a damping body.

5. Damping plate according to claim 3 or 5, wherein the spring surrounds the damping body.

6. Damping plate according to any of the claims 3 - 5, wherein the spring is formed out of rubber.

7. Damping plate according to any of the claims 4 - 6, wherein the damping body is formed out of silicon material.

8. Training assembly comprising
- a training device for stimulating at least part of the body of a living creature by means of vibration and
- a damping plate according to any of the preceding claims.

9. Training assembly according to claim 8, wherein the training device is supported by the damping plate.

10. Training assembly according to claim 8 or 9, wherein the training device is adapted to vibrate with a frequency of between 0 and 100 Hz, preferably between 20 and 60 Hz.

11. Training device for stimulating at least part of the body of a living creature by means of vibration, comprising
- a base structure comprising a lower surface which in use substantially is directed to a foundation on which the training device is placed,
- an vibration member comprising a contact area for making contact with at least part of the body of the living creature,
- driving means for driving the vibration member such that the vibration member makes a vibrating movement, wherein
attached to the lower surface is at least one damping member for in use being placed on the foundation, which damping member is adapted to prevent transmission of the vibration of the training device to the foundation.

12. Training device according to claim 11, wherein the at least one damping member together have a spring constant of between 15 and 35 kN/m, preferably between 20 and 22 kN/m.

13. Training device according to claim 11 or 12, wherein the at least one damping member comprises a spring.

14. Training device according to any of the claims 11 - 13, wherein the at least one damping member comprises a damping body.

15. Training device according to any of the claims 11 - 14, wherein the spring surrounds the damping body.

16. Training device according to any of the claims 13 - 15, wherein the spring is formed out of rubber.

17. Training device according to any of the claims 14 - 16, wherein the at least one damping member is formed out of silicon material.
Training device according to any of the claims 11 - 17, wherein the driving means are adapted to move the vibration member with a frequency of between the 0 and 100 Hz, preferably between 20 and 60 Hz.
